(19) Europäisches Patentamt / European Patent Office / Office européen des brevets

(11) **EP 2 147 592 B1**

(12) **EUROPEAN PATENT SPECIFICATION**

(45) Date of publication and mention
of the grant of the patent:
**28.12.2011 Bulletin 2011/52**

(51) Int Cl.:
**A01G 25/09** (2006.01)     **A01G 25/16** (2006.01)

(21) Application number: **09165922.7**

(22) Date of filing: **20.07.2009**

(54) **Reel irrigation assembly and associated control method**

Rollenbewässerungsanordnung und zugehöriges Steuerverfahren

Ensemble de bobine d'irrigation et procédé de commande associé

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.07.2008 IT MO20080198**

(43) Date of publication of application:
**27.01.2010 Bulletin 2010/04**

(73) Proprietor: **Comer Industries S.p.A.**
**20145 Milano (IT)**

(72) Inventor: **Brunazzi, Achille**
**42044, Gualtieri, Frazione Santa Vittoria RE (IT)**

(74) Representative: **Modiano, Micaela Nadia**
**Modiano Gardi Patents SAS**
**Via Meravigli 16**
**20123 Milano (IT)**

(56) References cited:
**WO-A-02/060236     FR-A- 2 782 890**
**FR-A- 2 796 806**

**Description**

The present invention relates to a reel irrigation assembly and to an associated control method.

The irrigation of agricultural crops, particularly herbaceous crops, is performed generally by using reel irrigation assemblies, which belong to the family of large self-propelled machines.

Known reel irrigation assemblies are constituted generally by a supporting structure, by a takeup spool that is supported so that it can rotate by the supporting structure, by a hose for the flow of the water that can be wound onto the takeup spool and is associated with an irrigator for dispensing the water, and by a turbine, which is connected to the flow hose and to an external pump, which is adapted to convert the kinetic energy of the water into mechanical energy for taking up the hose.

The turbine is generally connected to the takeup spool by means of a reduction unit with a speed variation system and is provided with a bypass valve.

By acting on the bypass valve and on the speed variation system of the reduction unit it is possible to adjust the rotation rate of the takeup spool about its own axis.

Indeed, in use the takeup spool is arranged proximate to a water outlet and the irrigator is moved by means of a tractor within the field to be irrigated, consequently unwinding the hose wound onto the takeup spool.

During irrigation, the hose is rewound by the takeup spool, thus moving the irrigator, which is supported by a truck provided with wheels.

The irrigator is characterized by a given sector angle and vertical elevation and its movement entails the irrigation of a certain area of the field to be irrigated.

Irrigation, and more particularly water distribution (understood as the ratio between the volume of water and the area onto which it is distributed), is influenced by a series of mutually independent variables.

These variables can be divided into four categories: hydraulic factors (i.e., operating pressures and flow-rates, turbine efficiency, hydraulic losses in the circuit, and diameter of the irrigator nozzle), mechanical factors (i.e., efficiency of the reduction unit, reduction ratio and hose retraction speed), geometric and dynamic factors of the jet (i.e., rotation rate of the irrigator, sector angle, elevation angle, and throw) and geometric factors of the field (i.e., dimensions and shape of the field to be irrigated).

Known reel irrigation assemblies can be grouped into two categories on the basis of the factors that they can control.

A first category is constituted by reel irrigation assemblies that are capable of controlling and keeping substantially constant the retraction speed of the supporting truck by acting on the hydraulic and mechanical factors.

A second category is constituted by known reel irrigation assemblies that are capable of controlling and modifying the operating parameters of the irrigator as a function of the geometry of the field.

Known reel irrigation assemblies are not free from drawbacks, since they do not allow to achieve a substantially uniform irrigation on the entire field to be irrigated and more particularly obtain a substantially constant water distribution.

Known reel irrigation assemblies are in fact unable to control automatically the various factors that affect water distribution.

More particularly, the first category of known reel irrigation assemblies does not allow to act on the retraction speed of the supporting truck on the basis of the geometric and dynamic factors of the jet and of the geometric factors of the field.

In fact, during the rewinding of the supply hose of the irrigator, in addition to a reduction in the required mechanical power as a consequence of the lower friction of the hose on the ground, compensated by the reduction in the rotation rate of the takeup spool, there is also a drop in the resistance of the hydraulic circuit, which causes an increase in the pressure of the jet and therefore of the throw and flow-rate of water.

The second category of known reel irrigation assemblies instead allows to modify the geometric and dynamic factors of the jet on the basis of the geometry of the field without considering the hydraulic and mechanical factors.

More particularly, this type of reel irrigator allows to vary the sector angle, in order to avoid distributing water beyond the borders of the field to be irrigated, but does not consider variations in pressure and flow-rate.

Further, the inability of known reel irrigation assemblies to perform a constant water distribution entails a considerable waste of water and energy resources, due to the poor optimization of the amount of water used and of the operating pressures.

This waste of water entails a considerable environmental impact, due to the importance of this primary resource, in addition to an uneven development of the irrigated crop.

WO 02/060236 discloses an irrigation system comprising a water-jet irrigation arm which is pivoted in a horizontal angle region around a vertical axis, an electronic control device controlling the horizontal angle region covered by the irrigation arm whereby the control device contains an electonic memory storing two or more hoizontal angle regions, and a programmable run-off control element wherein a sequence of stored horizontal angle regions may be established by means of a GPS receiver.

The aim of the present invention is to eliminate the above-mentioned drawbacks of the background art, by providing a reel irrigation assembly that allows to distribute constantly and uniformly the liquid on the soil to be irrigated, so as to obtain a substantially constant water distribution.

Within this aim, an object of the present invention is to provide a reel irrigation assembly that allows to monitor all the operating parameters (i.e., the hydraulic, mechanical, geometric and dynamic factors of the jet and the geometric factors of the field) that affect irrigation and therefore water distribution.

Another object of the present invention is to optimize the quantity of water that is distributed, in order to reduce waste and at the same time achieve uniform growth of the irrigated crop.

Another object of the present invention is to reduce, with respect to known reel irrigation assemblies, the energy demand required for the irrigation and the requirement of labor needed to control and manage the irrigators.

Another object of the present invention is to provide a reel irrigation assembly that is simple, relatively easy to provide in practice, safe in use, effective in operation, and of relatively low cost.

In accordance with the invention, there is provided a reel irrigation assembly, as defined in the appended claims.

Further characteristics and advantages of the present invention will become better apparent from the following detailed description of a preferred but not exclusive embodiment of a reel irrigation assembly, illustrated by way of non-limiting example in the accompanying drawings, wherein:

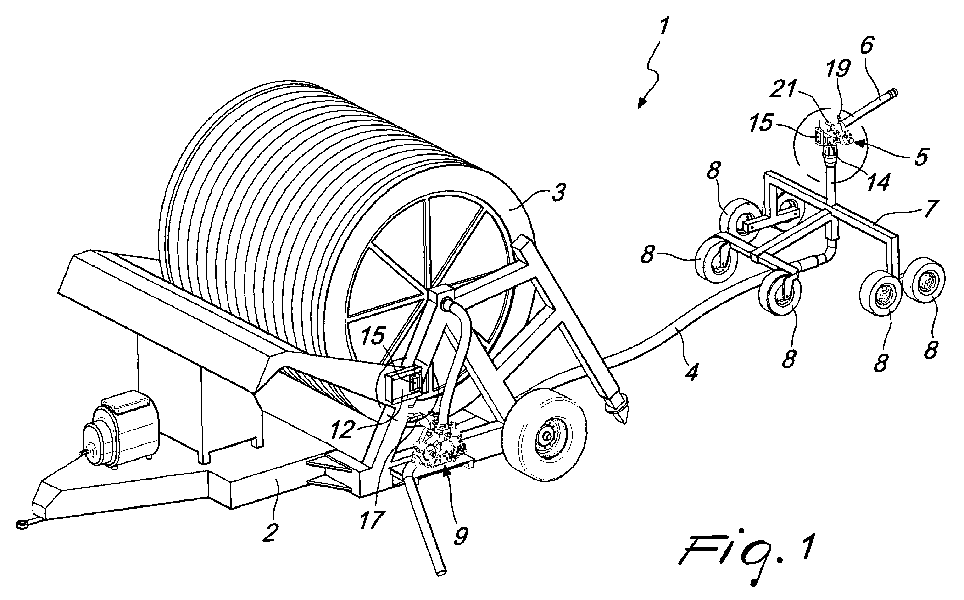

Figure 1 is a perspective view of a reel irrigation assembly according to the invention in a preferred embodiment;

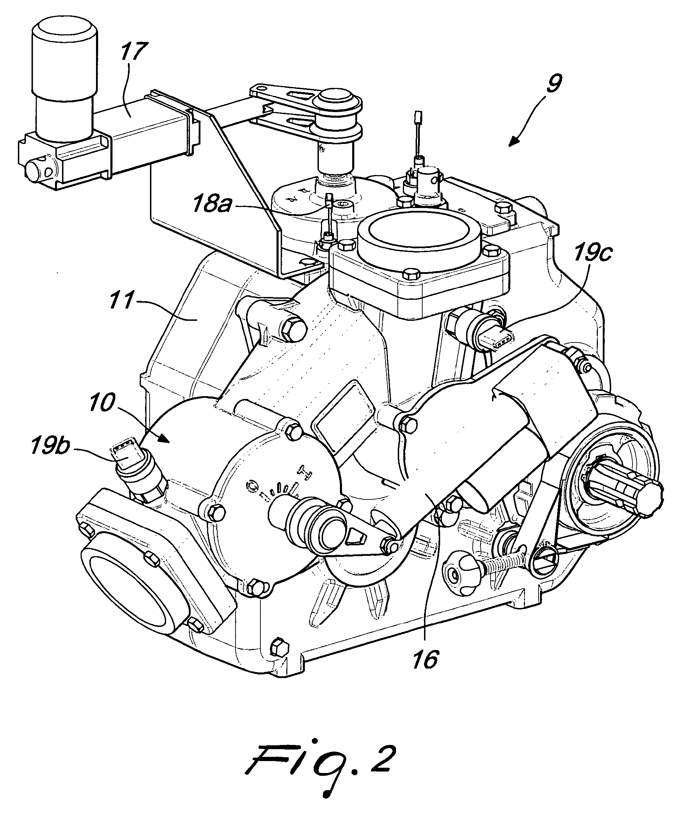

Figure 2 is a first detail perspective view of the turbine of the reel irrigation assembly of Figure 1;

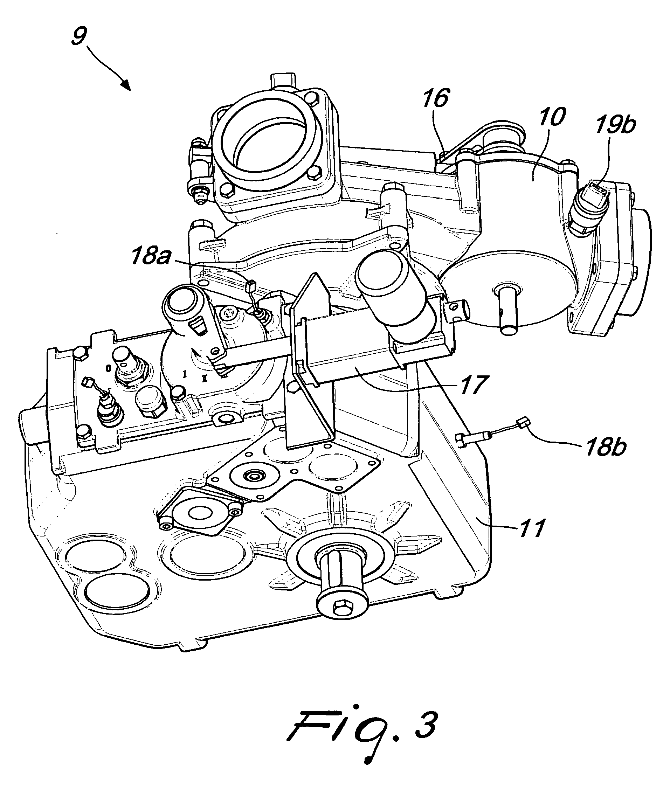

Figure 3 is a second detail perspective view of the turbine of the reel irrigation assembly of Figure 1;

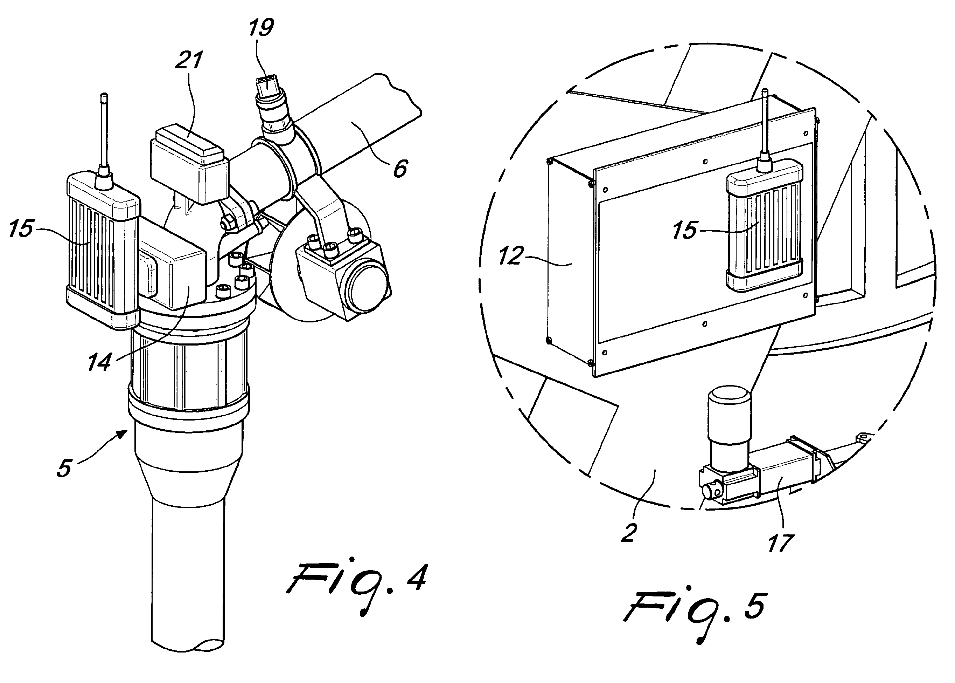

Figure 4 is a detail view of the irrigator of the reel irrigation assembly of Figure 1;
Figure 5 is a detail view of the electronic control unit of the reel irrigation assembly of Figure 1;

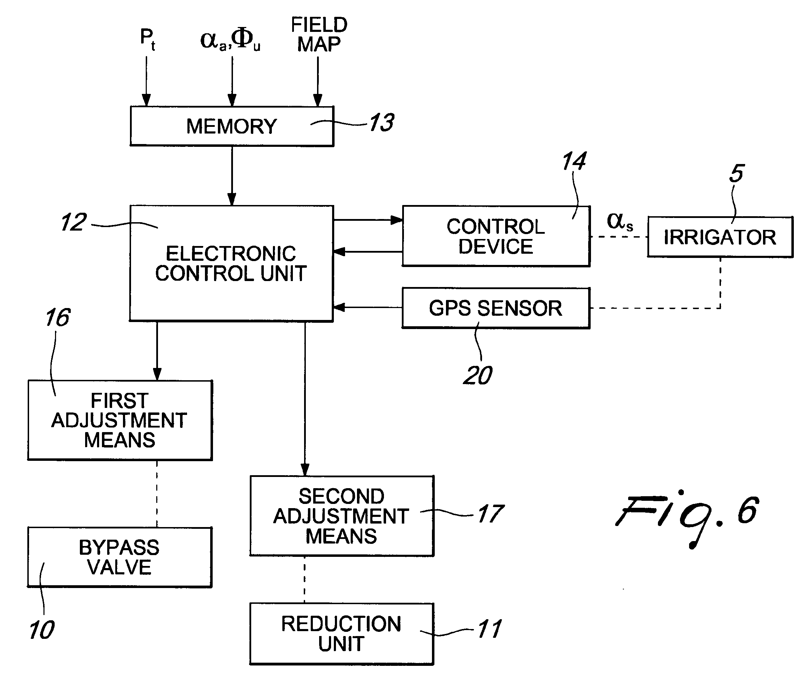

Figure 6 is a schematic block diagram of the management system of the reel irrigation assembly of Figure 1.

With reference to the figures, the reference numeral 1 generally designates a reel irrigation assembly according to the invention.

The assembly 1 comprises a supporting structure 2, a takeup element 3 that has a substantially cylindrical shape and is supported so that it can rotate about its own axis by the supporting structure 2, a hose 4 for the flow of a working liquid, generally water, which can be wound around the takeup element 3 and can be connected to an external user device, and an irrigator 5, which is associated with the hose 4 and is provided with at least one nozzle 6 for dispensing water.

More particularly, the irrigator 5 is supported by a truck 7 that is provided with wheels 8 and is adapted to facilitate its movement on a field to be irrigated. Advantageously, the irrigator 5, of a type that is known to the person skilled in the art, is provided with a jet breaker and is supported so that it can rotate through 360° by the truck 7.

The assembly 1 further comprises motor means, which are connected mechanically to the takeup element 3 and are adapted to turn it about its own axis in order to wind the hose 4.

Advantageously, the motor means comprise a turbine 9 that can be associated with the external user device, for example a pump, and comprises a bypass valve 10 and a reduction unit I 1 with a speed variation system that is connected mechanically to the takeup element 3; the hose 4 is associated with the turbine 9.

The turbine 9 allows to convert the kinetic energy of the water in input into mechanical energy for the rotation of the takeup element 3.

More particularly, the actuation of the turbine 9 allows to turn the takeup element 3 about its own axis in order to rewind the hose 4, thus recovering the irrigator 5 after it has been moved away from the takeup element in order to perform the irrigation of an area of a field to be irrigated.

According to the invention, the assembly 1 comprises an electronic control unit 12 for data processing, at least one memory 13 that contains at least one preset theoretical reference value $P_t$ and is functionally connected in input to the control unit 12.

Advantageously, the electronic control unit is arranged on the supporting structure 2, but alternative embodiments are not excluded in which the control unit 12 is located on the tractor that is adapted to tow the supporting structure 2 or otherwise in a location that is distant from the assembly 1.

The reference value used can be for example the value of the water distribution, where the expression "water distribution" is used to reference the ratio between the dispensed volume of water and the area on which such volume is distributed, or the value of the humidity of the soil, these two being non-limiting examples that are easily replaceable with others for the person skilled in the art.

The assembly I further comprises a control device 14, which is associated with the irrigator 5 and comprises means, for example an encoder, for detecting the value of at least one of the operating parameters of the irrigator selected from the group that comprises: the sector angle $\alpha_s$ (i.e., the aperture angle with which the irrigator 5 dispenses the working fluid); the elevation angle $\alpha_a$ (i.e., the angle of inclination with respect to the horizon), the angular velocity $\omega_r$

and the nozzle diameter $\Phi_u$, as well as means for modifying one or more of these detected operating parameters, for example a first actuator, which is not shown in the figures.

The control device 14 is functionally connected in input and in output to the electronic control unit 12 by way of wireless communication means 15.

More particularly, the wireless communication means 15 comprise at least one pair of radio transceivers arranged respectively on the control unit 12 and on the irrigator 5 or any other type of wireless transmission known to the person skilled in the art.

The assembly 1 further comprises means 16, 17 for adjusting the motor means, which are adapted to vary the rotation rate $V_r$ of the takeup element 3 and are functionally connected in output to the control unit 12.

Advantageously, in the embodiment shown in the figures, the adjustment means 16, 17 comprise first adjustment means 16, which are associated with the turbine 9 and are adapted to change the state of the bypass valve 10, and second adjustment means 17, which are associated with the reduction unit 11 and are adapted to modify the state of the speed variation system.

More particularly, in the embodiment shown in the figures, the first and second adjustment means 16 and 17 are constituted respectively by a first linear actuator and a second linear actuator, which are controlled by the control unit 12.

The assembly 1 further comprises first sensor means 18 for detecting the rotation rate $V_r$ of the takeup element 3, which are functionally connected in input to the control unit 12.

More particularly, the first sensor means 18 comprise a first sensor 18a and a second sensor 18b, which are arranged on the turbine 9 and are adapted to detect the rotation rate of the output shaft of the turbine that mates with the takeup element 3; once the rotation rate of the output shaft of the turbine has been detected, it is easy to calculate, if the corresponding transmission ratio is known, the rotation rate $V_r$ of the takeup element 3.

As an alternative, it is possible to arrange a sensor directly on the takeup element.

The assembly I further comprises second sensor means 19 for detecting a value of the pressure $P_i$ and/or of the flow-rate $Q_i$ of the working liquid.

More particularly, the second sensor means 19 comprise at least one first pressure transducer 19a, of a type that is known to the person skilled in the art, which is arranged at the nozzle 6 and is adapted to detect the value of the output pressure $P_i$ of the water.

Advantageously, the second sensor means 19 also comprise a second pressure transducer 19b and a third pressure transducer 19c, which are arranged respectively at the inlet and at the outlet of the turbine 9 so as to be able to determine the efficiency of the turbine.

In an alternative embodiment, not shown in the figures, it is possible to arrange a flow-rate detector on the turbine 9 which is adapted to detect the value of the flow $Q_i$ that passes through the turbine and from which it is possible to calculate in a known manner the value of the pressure $P_i$ at the output of the nozzle 6.

The assembly 1 further comprises a GPS sensor 20, which is functionally connected in input to the control unit 12 and is adapted to allow the detection of the position of the irrigator 5, on which a GPS antenna 21 is arranged, in the field to be irrigated.

The control unit 12 comprises means for comparing the instantaneous position of the irrigator 5 detected by the GPS sensor with a position on a map of the field to be irrigated that is stored in the memory 13 and is configured to control, by means of the control device 14, at least one of the detected operating parameters and/or the rotation rate $V_r$ of the takeup element 3 on the basis of the comparison of the detected position of the irrigator 5 and the map.

More particularly, in order to maintain the jet delivered by the irrigator 5 within the perimeter of the field to be irrigated, or to avoid the presence of obstacles, the control unit 12 performs, by means of the control device 14 and the adjustment means 16, 17, a variation of the sector angle $\alpha_s$ of the delivered jet and of the rotation rate $V_r$.

These variations are again detected by the control device 14 and by the first sensor means 18.

The control unit 12 calculates a current reference value $P_a$, for example a water distribution value, on the basis of the detected operating parameters of the irrigator 5, of the detected rotation rate $V_r$ and of the detected pressure value $P_i$ and/or flow-rate value $Q_i$, and compares the current reference value $P_a$ with the preset theoretical reference value $P_t$.

If the current reference value $P_a$ is different from the preset theoretical reference value $P_t$, the control unit 12 calculates a variation of at least one of the detected operating parameters of the irrigator 5 and/or of the rotation rate $V_r$ to be applied to the current reference value $P_a$, so that the latter corresponds substantially to the theoretical reference value $P_t$ and controls the control device 14 and/or the adjustment means 16, 17 in order to perform such variation of at least one of the detected operating parameters and/or of the rotation rate $V_r$.

The formulas used, if the reference value that is used corresponds to water distribution, are the following:

$$P_a = \gamma \quad \frac{(Qi * t * n° \text{ of passages})}{(G^2 * \alpha s)}$$

$$V_r = \frac{(Qi * 3600)}{(G * \alpha s * Pa)}$$

$$G = \frac{(200 * Pi * \varphi^2 * \sin(2\alpha a) * \sqrt{\Phi u})}{(g * 2{,}898 * Pi^{0.6})}$$

$$Q_i = \varphi * \quad \left(\frac{\Phi u}{1000}\right)^2 * \left(\frac{\pi}{4}\right) * \sqrt{\frac{(2 * Pi * 10^5)}{\rho}}$$

where $P_a$ is the current water distribution, G is the throw of the irrigator 5, $\varphi$ is the outflow coefficient (equal to 0.938305), g is the gravitational acceleration and $\rho$ is the density of the water.

Advantageously, in a preferred but not exclusive embodiment and form of management of the assembly 1, the operating parameter that is controlled by the control device 14, or detected and possibly modified depending on the geometry of the field to be irrigated, is constituted by the sector angle $\alpha_s$, to which the angular velocity $\omega_r$ is correlated, which therefore varies as such sector angle varies, while the remaining operating parameters, comprising the elevation angle $\alpha_s$ and the nozzle diameter $\Phi_u$ are fixed and preset in the memory 13 by an operator.

The current reference value $P_a$ is thus controlled, on the basis of the variations of the sector angle $\alpha_s$ and of the pressure $P_i$ in output from the nozzle 6, by acting on the rotation rate $V_r$, i.e., by calculating the extent of its variation that is necessary in order to maintain the current reference value $P_a$ substantially constant and equal to the theoretical reference value $P_t$ and applying such variation by way of the first and second adjustment means 16 and 17.

Conveniently, the control unit 12 is configured to control the first adjustment means 16 or at least one between the first and second adjustment means 16 and 17, depending on whether the variation of the rotation rate $V_r$ falls respectively within a first or second reference interval, which are preset in the memory 13.

The limit values that characterize the first and second reference interval are mutually different, and more particularly the limit values of the first reference interval are lower than the limit values of the second reference interval.

More particularly, if the variation of the rotation rate $V_r$ falls within the first reference interval, the control unit 12 acts on the first adjustment means 16 to modify the state of the bypass valve 10, whereas if such variation falls within the second reference interval, i.e., if the variation to be applied to the rotation rate $V_r$ is of a greater extent than the variations that belong to the first reference interval, then the control unit 12 acts only on the second adjustment means 17 or, as an alternative, simultaneously on the first and second adjustment means 16 and 17 in order to modify the state of the speed variation system of the reduction unit 11.

Preferably, the assembly 1 also comprises remote information means, constituted for example by a GSM or UMTS telephone modem, which is adapted to communicate to an operator, who is located remotely from the assembly 1, the value of at least one of the detected operating parameters and/or the value of the rotation rate $V_r$ of the takeup element 3.

The operation of the irrigation assembly in performing the method according to the invention is as follows.

More particularly, in the following description of the operation of the assembly 1, the reference value that is assumed is the water distribution.

First of all, as mentioned above, the irrigator 5 is positioned on the field to be irrigated, unwinding the hose 4, and then the step for irrigating a strip of the field to be irrigated begins during which the irrigator 5 is progressively drawn back toward the takeup element 3.

The area of the irrigated strip is a function of the operating parameters of the irrigator 5, i.e., of the sector angle $\alpha_s$, of the elevation angle $\alpha_a$, of the angular velocity $\omega_r$ and of the nozzle diameter $\Phi_u$ in addition to the rotation rate $V_r$

of the takeup element 3.

The operation of the irrigation assembly according to the invention provides for at least one step for detecting the value of the pressure $P_i$ of the working liquid that exits from the nozzle 6, performed by means of the first transducer 19a, and a step for detecting the rotation rate $V_r$ of the takeup element 3.

The first transducer 19a, which detects the pressure $P_i$ of the water at the output of the nozzle 6, as well as the first and second sensors 18a and 18b, which allow to detect the rotation rate $V_r$, report the respective detected information to the control unit 12.

Further, the control device 14 detects at least some of the operating parameters of the irrigator 5 and reports them, by way of the wireless communication means 15, to the control unit 12.

Preferably, the first device 13 detects instantaneously the value of the sector angle $\alpha_s$ and of the correlated angular velocity $\omega_r$ while the remaining operating parameters, which comprise the elevation angle $\alpha_a$ and the nozzle diameter $\Phi_u$, are preset by an operator in the memory 13 by way of interface means, which are not shown in the figures.

By means of the GPS sensor 20, the position of the irrigator 5 is then detected and compared with the map of the field to be irrigated, which is preset in the memory 13 or detected in each instance and entered into the memory 13. On the basis of this comparison, the control unit 12 then performs the adjustment, by way of the control device 14 and the adjustment means 16, 17, of at least one of the detected operating parameters, preferably the sector angle $\alpha_s$ and/or the rotation rate $V_r$.

The control unit 12, on the basis of the received information related to the detected operating parameters, to the pressure value $P_i$ and/or flow-rate value $Q_i$ and to the rotation rate $V_r$, calculates the value of the current water distribution $P_a$ by using the formula described above.

The control unit 12 then compares the current water distribution value $P_a$ with the theoretical water distribution value $P_t$ that is preset in the memory 13.

If the current water distribution value $P_a$ is different from the theoretical water distribution value $P_t$, the control unit 12 calculates a variation of at least one of the detected operating parameters $\alpha_s$, $\alpha_a$, $\omega_r$ and $\Phi_u$ and/or of the rotation rate $V_r$ so that the value of the current water distribution $P_a$ substantially corresponds to the value of the theoretical water distribution $P_t$, and then controls the control device 14 and/or the adjustment means 16, 17 in order to perform such variation.

More particularly, the control unit 12 calculates, on the basis of the values of the pressure $P_i$ and of the detected sector angle $\alpha_s$, the variation of the rotation rate $V_r$ of the takeup element 3 that is needed in order to make the current water distribution value $P_a$ equal to the theoretical water distribution $P_t$.

Once the variation of the rotation rate $V_r$ has been calculated, the control unit 12 actuates, depending on whether such variation falls within the first or second preset reference intervals, respectively the first adjustment means 16 or at least one between the first and second adjustment means 16 and 17 to perform such rate variation.

The control unit 12 calculates substantially continuously the value of the current water distribution $P_a$, updating it with the value of the pressure $P_i$ and of the sector angle $\alpha_s$ detected in each instance, and calculates accordingly the variation of the rotation rate $V_r$ that is needed so that the value of the current water distribution remains substantially constant and equal to the preset theoretical water distribution value $P_t$.

In practice it has been found that the described invention achieves the proposed aim and objects, and in particular the fact is stressed that it allows to maintain the value of the water distribution substantially constant, taking into account practically all the factors that can be involved during irrigation and can influence water distribution.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the protective scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. A reel irrigation assembly (1), comprising a supporting structure (2), a takeup element (3) that is supported rotatably by said supporting structure (2), a hose (4) for the flow of a working liquid that can be wound onto said takeup element (3) and can be associated with an external user device, motor means which are connected mechanically to said takeup element (3), and an irrigator (5) that is associated with said hose (4) and is provided with at least one nozzle (6) for dispensing said working liquid, the reel irrigation assembly (1) further comprising:

- an electronic control unit (12) for data processing;
- at least one memory (13) that contains at least one preset theoretical reference value and is functionally connected in input to said electronic control unit (12);
- a control device (14), which is associated with said irrigator (5) and comprises means for detecting the value of at least one of the operating parameters of said irrigator (5) selected from the group that comprises: sector angle, elevation angle, angular velocity and nozzle diameter, and means for modifying at least one of said detected operating parameters; said control device (14) being functionally connected, in input and in output, to said electronic control unit (12);
- means (16, 17) for adjusting said motor means, which are adapted to vary the rotation rate of said takeup element (3) and are functionally connected in output to said electronic control unit (12);
- first sensor means (18), which are adapted to detect said rotation rate and are functionally connected in input to said electronic control unit (12);
- second sensor means (19), which are adapted to detect a pressure or flow-rate value of said working liquid and are functionally connected in input to said electronic control unit (12);
- a GPS sensor (20), which is functionally connected in input to said electronic control unit (12) and is adapted to allow to detect the position of said irrigator (5), said electronic control unit (12) comprising means for comparing the instantaneous position of said irrigator (5) detected by said GPS sensor (20) with a position on a map of the field to be irrigated that is stored in said memory (13); said electronic control unit (12) being configured to control, by means of said control device (14) and said adjustment means (16, 17), respectively at least one of said detected operating parameters and/or said rotation rate, on the basis of the comparison of the detected position of said irrigator (5) and of said map;

said electronic control unit (12) calculating a current reference value on the basis of said detected operating parameters, of said rotation rate and of said pressure and/or flow-rate value, comparing said current reference value with said theoretical reference value and calculating, if said current reference value is different from said theoretical reference value, a variation of at least one of said detected operating parameters and/or of said rotation rate so that said current reference value substantially corresponds to said theoretical reference value and driving said control device (14) and/or said adjustment means (16, 17) in order to perform said variation of at least one of said detected operating parameters and/or of said rotation rate; said electronic control unit (12) being functionally connected to said control device (14) by way of wireless communication means (15);
said detected operating parameters comprising the sector angle and the angular velocity and the remaining operating parameters, comprising the elevation angle and the nozzle diameter, being contained in said memory (13) or can be preset in said memory by an operator by way of interface means;
the assembly being **characterized in that**:

said motor means comprise at least one turbine (9), which can be associated with said external user device and comprises at least one bypass valve (10) and at least one reduction unit (11) with a speed variation system that is connected mechanically to said takeup element (3), said hose (4) being associated with said turbine (9), and said adjustment means (16, 17) comprising first adjustment means (16), which are associated with said turbine (9) and are adapted to change the state of said bypass valve (10), and second adjustment means (17), which are associated with said reduction unit (11) and are adapted to change the state of said speed variation system; and
said variation of at least one of said detected operating parameters and/or of said rotation rate corresponds to a variation of said rotation rate, said electronic control unit (12) being configured to control said first adjustment means (16) or at least one between said first adjustment means (16) and said second adjustment means (17), depending on whether said variation of the rotation rate falls respectively within a first reference interval or a second reference interval, which are preset in said memory (13).

2. The assembly according to claim 1, **characterized in that** it comprises remote information means, which are adapted to report to an operator the value of at least one of said detected operating parameters and/or of said rotation rate.

3. A method for controlling the reel irrigation assembly (1) according to claim 1, comprising the steps of:

- detecting a pressure and/or flow-rate value of the working liquid;
- detecting the rotation rate of said takeup element (3);
- detecting the value of at least one of the operating parameters of said irrigator (5) selected from the group comprising: sector angle, elevation angle, angular velocity and diameter of said nozzle;
- detecting the map of a field to be irrigated;

- detecting the position of said irrigator (5) by means of a GPS sensor (20);
- comparing the detected position of said irrigator (5) with said map of the field to be irrigated;
- controlling at least one among said detected operating parameters and/or said rotation rate on the basis of said comparison;
- calculating a current reference value on the basis of said pressure and/or flow-rate value, of said rotation rate and of said detected operating parameters;
- comparing said current reference value with a predefined theoretical reference value;
- calculating, if said current reference value is different from said theoretical reference value, a variation of at least one of said detected operating parameters and/or of said rotation rate so that said current reference value substantially corresponds to said theoretical reference value;
- applying said variation of at least one of said detected operating parameters and/or of said rotation rate.

## Patentansprüche

1. Eine Rollenbewässerungsanordnung (1), die Folgendes umfasst: eine tragende Struktur (2), ein Aufnahmeelement (3), das drehbar von der tragenden Struktur (2) getragen wird, einen Schlauch (4) für den Fluss einer Betriebsflüssigkeit, der auf das Aufnahmeelement (3) aufgewickelt und mit einer externen Benutzervorrichtung verbunden werden kann, Motormittel, die mechanisch mit dem Aufnahmeelement (3) verbunden sind, und einen Bewässerer (5), der mit dem Schlauch (4) verbunden und mit mindestens einer Düse (6) für die Abgabe der Betriebsflüssigkeit ausgestattet ist, wobei die Rollenbewässerungsanordnung (1) weiter Folgendes umfasst:

   - eine elektronische Steuerungseinheit (12) für die Datenverarbeitung;
   - mindestens einen Speicher (13), der mindestens einen voreingestellten theoretischen Bezugswert enthält und in der Eingabe funktionell mit der elektronischen Steuerungseinheit (12) verbunden ist;
   - eine Steuerungsvorrichtung (14), die mit dem Bewässerer (5) verbunden ist und Mittel zur Erfassung des Werts mindestens eines der Arbeitsparameter des Bewässerers (5) umfasst, gewählt aus der Gruppe, die Folgendes umfasst,: Zentriwinkel, Höheriwinkel, Winkelgeschwindigkeit und Düsendurchmesser, und Mittel zur Änderung mindestens eines der erfassten Arbeitsparameter; wobei die Steuerungsvorrichtung (14) im Eingang und im Ausgang funktionell mit der elektronischen Steuerungseinheit (12) verbunden ist;
   - Mittel (16, 17) zur Anpassung der Motormittel, die ausgebildet sind, um die Rotationsgeschwindigkeit des Aufnahmeelements (3) zu variieren, und im Ausgang funktionell mit der elektronischen Steuerungseinheit (12) verbunden sind;
   - erste Sensormittel (18), die ausgebildet sind, um die Rotationsgeschwindigkeit zu erfassen, und im Eingang funktionell mit der elektronischen Steuerungseinheit (12) verbunden sind;
   - zweite Sensormittel (19), die ausgebildet sind, um einen Druck- oder Strömungsgeschwindigkeitswert der Betriebsflüssigkeit zu erfassen, und im Eingang funktionell mit der elektronischen Steuerungseinheit (12) verbunden sind;
   - einen GPS-Sensor (20), der im Eingang funktionell mit der elektronischen Steuerungseinheit (12) verbunden und ausgebildet ist, um es zu ermöglichen, die Position des Bewässerers (5) zu erfassen, wobei die elektronische Steuerungseinheit (12) Mittel umfasst, um die momentane Position des Bewässerers (5), die von dem GPS-Sensor (20) erfasst wird, mit einer Position auf einer Karte des zu bewässernden Feldes, die in dem Speicher (13) gespeichert ist, zu vergleichen; wobei die elektronische Steuerungseinheit (12) konfiguriert ist, um mit Hilfe der Steuerungsvorrichtung (14) und der Anpassungsmittel (16, 17) jeweils mindestens einen der erfassten Arbeitsparameter und/oder die Rotationsgeschwindigkeit anhand des Vergleichs der erfassten Position des Bewässerers (5) mit der Karte zu steuern;

   wobei die elektronische Steuerungseinheit (12) anhand der erfassten Arbeitsparameter, der Rotationsgeschwindigkeit und des Druck- und/oder Strömungsgeschwindigkeitswerts einen aktuellen Bezugswert berechnet, den aktuellen Bezugswert mit dem theoretischen Bezugswert vergleicht und, falls sich der aktuelle Bezugswert von dem theoretischen Bezugswert unterscheidet, eine Variation mindestens eines der erfassten Arbeitsparameter und/oder der Rotationsgeschwindigkeit berechnet, so dass der aktuelle Bezugswert im Wesentlichen dem theoretischen Bezugswert entspricht, und die Steuerungsvorrichtung (14) und/oder die Anpassungsmittel (16, 17) antreibt, um die Variation mindestens eines der erfassten Arbeitsparameter und/oder der Rotationsgeschwindigkeit vorzunehmen; wobei die elektronische Steuerungseinheit (12) durch drahtlose Kommunikationsmittel (15) funktionell mit der Steuerungsvorrichtung (14) verbunden ist;
   wobei die erfassten Arbeitsparameter, die den Zentriwinkel und die Winkelgeschwindigkeit und die restlichen Arbeitsparameter, umfassend den Höhenwinkel und den Düsendurchmesser, in dem Speicher (13) enthalten sind oder von einem Bediener über Schnittstellenmittel in dem Speicher voreingestellt werden können;
wobei die Anordnung **dadurch gekennzeichnet ist, dass**:

die Motormittel mindestens eine Turbine (9) umfassen, die mit der externen Benutzervorrichtung verbunden werden kann und mindestens ein Umlaufventil (10) und mindestens eine Reduktionseinheit (11) mit einem Geschwindigkeits-Variationssystem umfasst, das mechanisch mit dem Aufnahmeelement (3) verbunden ist, wobei der Schlauch (4) mit der Turbine (9) verbunden ist und die Anpassungsmittel (16, 17) erste Anpassungsmittel (16) umfassen, die mit der Turbine (9) verbunden und ausgebildet sind, um den Status des Umlaufventils (10) zu ändern, und zweite Anpassungsmittel (17), die mit der Reduktionseinheit (11) verbunden und ausgebildet sind, um den Status des Geschwindigkeits-Variationssystems zu ändern; und
die Variation mindestens eines der erfassten Arbeitsparameter und/oder der Rotationsgeschwindigkeit einer Variation der Rotationsgeschwindigkeit entspricht, wobei die elektronische Steuerungseinheit (12) konfiguriert ist, um die ersten Anpassungsmittel (16) oder mindestens eines der ersten Anpassungsmittel (16) und der zweiten Anpassungsmittel (17) zu steuern, je nachdem, ob die Variation der Rotationsgeschwindigkeit in ein erstes Bezugsintervall oder ein zweites Bezugsintervall fällt, die in dem Speicher (13) voreingestellt sind.

2. Die Anordnung gemäß Anspruch 1, **dadurch gekennzeichnet, dass** sie entfernte Informationsmittel umfasst, die ausgebildet sind, um einem Bediener den Wert mindestens eines der erfassten Arbeitsparameter und/oder der Rotationsgeschwindigkeit mitzuteilen.

3. Ein Verfahren zur Steuerung der Rollenbewässerungsanordnung (1) gemäß Anspruch 1, das folgende Schritte umfasst:

- Erfassung eines Druck- und/oder Strömungsgeschwindigkeitswerts der Betriebsflüssigkeit;
- Erfassung der Rotationsgeschwindigkeit des Aufnahmeelements (3);
- Erfassung des Werts mindestens eines der Arbeitsparameter des Bewässerers (5), gewählt aus der Gruppe, die Folgendes umfasst: Zentriwinkel, Höhenwinkel, Winkelgeschwindigkeit und Durchmesser der Düse;
- Erfassung der Karte eines zu bewässernden Feldes;
- Erfassung der Position des Bewässerers (5) mit Hilfe eines GPS-Sensors (20);
- Vergleich der erfassten Position des Bewässerers (5) mit der Karte des zu bewässernden Feldes;
- Steuerung mindestens eines der erfassten Arbeitsparameter und/oder der Rotationsgeschwindigkeit anhand des Vergleichs;
- Berechnung eines aktuellen Bezugswerts anhand des Druck- und/oder Strömungsgeschwindigkaitswerts, der Rotationsgeschwindigkeit und der erfassten Arbeitsparameter;
- Vergleich des aktuellen Bezugswerts mit einem vordefinierten theoretischen Bezugswert;
- Berechnung, falls sich der aktuelle Bezugswert von dem theoretischen Bezugswert unterscheidet, einer Variation mindestens eines der erfassten Arbeitsparameter und/oder der Rotationsgeschwindigkeit, so dass der aktuelle Bezugswert im Wesentlichen dem theoretischen Bezugswert entspricht;
- Anwendung der Variation mindestens eines der erfassten Arbeitsparameter und/oder der Rotationsgeschwindigkeit.

**Revendications**

1. Ensemble d'irrigation à enrouleur (1) comprenant une structure de support (2), un élément d'enroulement (3) qui est supporté avec faculté de rotation par ladite structure de support (2), un tuyau (4) pour l'écoulement d'un liquide de travail qui peut être enroulé sur ledit élément d'enroulement (3) et qui peut être associé à un dispositif d'utilisateur externe, des moyens de moteur qui sont raccordés mécaniquement audit élément d'enroulement (3) et un irrigateur (5) qui est associé audit tuyau (4) et est pourvu d'au moins une buse (6) permettant de délivrer ledit liquide de travail, l'ensemble d'irrigation à enrouleur (1) comprenant en outre :

- une unité de commande électronique (12) pour le traitement des données ;
- au moins une mémoire (13) qui contient au moins une valeur de référence théorique préréglée et est raccordée fonctionnellement en entrée à ladite unité de commande électronique (12) ;
- un dispositif de commande (14) qui est associé audit irrigateur (5) et comprend un moyen permettant de détecter la valeur d'au moins un des paramètres de fonctionnement dudit irrigateur (5) choisi dans le groupe qui comprend : l'angle sectoriel, l'angle d'élévation, la vitesse angulaire et le diamètre de buse, et un moyen permettant de modifier au moins un desdits paramètres de fonctionnement détectés ; ledit dispositif de commande (14) étant connecté fonctionnellement, en entrée et en sortie, à ladite unité de commande électronique (12) ;
- des moyens (16, 17) permettant d'ajuster lesdits moyens de moteur, qui sont adaptés pour faire varier la vitesse de rotation dudit élément d'enroulement (3) et qui sont connectés fonctionnellement en sortie à ladite unité de commande électronique (12) ;
- des premiers moyens de capteur (18) qui sont adaptés pour détecter ladite vitesse de rotation et qui sont connectés fonctionnellement en entrée à ladite unité de commande électronique (12) ;
- des seconds moyen de capteur (19) qui sont adaptés pour détecter une valeur de pression ou de débit dudit liquide de travail et qui est connecté fonctionnellement en entrée à ladite unité de commande électronique (12) ;
- un capteur GPS (20) qui est connecté fonctionnellement en entrée à ladite unité de commande électronique (12) et qui est adapté pour permettre de détecter la position dudit irrigateur (5), ladite unité de commande électronique (12) comprenant des moyens permettant de comparer la position instantanée dudit irrigateur (5) détectée par ledit capteur GPS (20) avec une position sur une carte du champ à irriguer qui est stockée dans ladite mémoire (13) ; ladite unité de commande électronique (12) étant configurée pour commander, au moyen dudit dispositif de commande (14) et desdits moyens d'ajustement (16, 17) respectivement au moins un desdits paramètres de fonctionnement détectés et/ou ladite vitesse de rotation, sur la base de la comparaison de la position détectée dudit irrigateur (5) et de ladite carte ;

ladite unité de commande électronique (12) calculant la valeur de référence actuelle sur la base desdits paramètres de fonctionnement détectés, de ladite vitesse de rotation et de ladite valeur de pression et/ou de débit, comparant ladite valeur de référence actuelle avec ladite valeur de référence théorique et calculant, si ladite valeur de référence actuelle est différente de ladite valeur de référence théorique, une variation d'au moins un desdits paramètres de fonctionnement détectés et/ou ladite vitesse de rotation de sorte que ladite valeur de référence actuelle corresponde sensiblement à ladite valeur de référence théorique et entraînant ledit dispositif de commande (14) et/ou lesdits moyens d'ajustement (16, 17) de façon à effectuer ladite variation d'au moins un desdits paramètres de fonctionnement détectés et/ou de ladite vitesse de variation ; ladite unité de commande électronique (12) étant connectée fonctionnellement audit dispositif de commande (14) par des moyens de communication sans fil (15) ;
lesdits paramètres de fonctionnement détectés comprenant l'angle sectoriel et la vitesse angulaire et les paramètres de fonctionnement restants, comprenant l'angle d'élévation et le diamètre de buse sont contenus dans ladite mémoire (13) ou peuvent être préréglés dans ladite mémoire par un opérateur à l'aide de moyens d'interface ;
l'ensemble étant **caractérisé en ce que** :

lesdits moyens de moteur comprenant au moins une turbine (9) qui peut être associée audit dispositif d'utilisateur externe et comprend au moins un clapet de dérivation (10) et au moins un réducteur (11) avec un système de variation de vitesse qui est raccordé mécaniquement audit élément d'enroulement (3), ledit tuyau (4) étant associé à ladite turbine (9), et lesdits moyens d'ajustement (16, 17) comprenant des premiers moyens d'ajustement (16) qui sont associés à ladite turbine (9) et sont adaptés pour changer l'état dudit clapet de dérivation (10), et des seconds moyens d'ajustement (17) qui sont associés audit réducteur (11) et sont adaptés pour changer l'état dudit système de variation de vitesse ; et
ladite variation d'au moins un desdits paramètres de fonctionnement et/ou de ladite vitesse de rotation correspond à une variation de ladite vitesse de rotation, ladite unité de commande électronique (12) étant configurée pour commander ledit premier moyen d'ajustement (16) ou au moins un du premier moyen d'ajustement (16) et du second moyen d'ajustement (17), selon que ladite variation de la vitesse de rotation relève respectivement d'un premier intervalle de référence ou d'un second intervalle de référence, qui sont préréglés dans ladite mémoire (13).

2. Ensemble selon la revendication 1, **caractérisé en ce qu'**il comprend des moyens d'information à distance, qui sont adaptés pour signaler à un opérateur la valeur d'au moins un desdits paramètres de fonctionnement détectés et/ou de la vitesse de rotation.

3. Procédé permettant de commander l'ensemble d'irrigation à enrouleur (1) selon la revendication 1, comprenant les étapes consistant à :

- détecter une valeur de pression et/ou de débit du liquide de travail ;
- détecter la vitesse de rotation dudit élément d'enroulement (3) ;
- détecter la valeur d'au moins un des paramètres de fonctionnement dudit irrigateur (5) choisi dans le groupe comprenant : l'angle sectoriel, l'angle d'élévation, la vitesse angulaire et le diamètre de ladite buse ;
- détecter la carte d'un champ à irriguer ;

- détecter la position dudit irrigateur (5) au moyen d'un capteur GPS (20) ;
- comparer la position détectée dudit irrigateur (5) avec ladite carte du champ à irriguer ;
- commander au moins un desdits paramètres de fonctionnement détectés et/ou ladite vitesse de rotation sur base de ladite comparaison ;
- calculer une valeur de référence actuelle sur la base de ladite valeur de pression et/ou de débit, de ladite vitesse de rotation et desdits paramètres de fonctionnement détectés ;
- comparer ladite valeur de référence actuelle avec une valeur de référence théorique prédéfinie ;
- calculer, si ladite valeur de référence actuelle est différente de ladite valeur de référence théorique, une variation d'au moins un desdits paramètres de fonctionnement détectés et/ou de ladite vitesse de rotation de sorte que ladite valeur de référence actuelle corresponde sensiblement à ladite valeur de référence théorique ;
- appliquer ladite variation d'au moins un desdits paramètres de fonctionnement détectés et/ou de ladite vitesse de rotation.

Fig. 1

Fig. 2

Fig. 3

Fig.4

Fig.5

EP 2 147 592 B1

*Fig. 6*

**EP 2 147 592 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02060236 A